# EUROPEAN PATENT APPLICATION

(11) **EP 1 696 066 A2**
(43) Date of publication of application: **30.08.2006**
(21) Application number: 05024222.1
(22) Date of filing: 07.11.2005
(51) Int. Cl.: D06F 33/02, D06F 35/00, D06F 39/08

(54) **Washing machine and washing method**

(30) Priority: 25.02.2005 KR 2005015829
(71) Applicant: LG Electronics Inc., Yongdungpo-gu Seoul (KR)
(72) Inventor: Kim, Na Eun, Yeongdeungpo-gu Seoul (KR); Jeon, Si Moon, Seocho-gu Seoul (KR); Woo, Kyung Chul, Yangcheon-gu Seoul (KR)
(74) Representative: Thum, Bernhard

(57) **Abstract**

A washing machine and a washing method thereof are disclosed, in which waste of washing water is reduced and washing efficiency is improved. The washing method includes the steps of determining the volume of laundry in a tub (S10), setting a first water level for a preliminary washing stroke and a second water level for a main washing stroke based on the determined volume of laundry (S20), carrying out the preliminary washing stroke using washing water of the first water level and steam (S30), and converting the preliminary washing stroke into the main washing stroke (S70) based on washing water of the second water level (S60) depending on an inner temperature of the tub (S40).

## Description

This application claims the benefit of the Korean Patent Application No. P2005-15829, filed on February 25, 2005, which is hereby incorporated by reference as if fully set forth herein.

### BACKGROUND OF THE INVENTION

### Field of the Invention

The present invention relates to a washing machine, and more particularly, to a washing machine using steam and a washing method thereof.

### Discussion of the Related Art

A washing machine is a representative electric home appliance that washes the laundry using detergent and water. The washing machine is classified into a top loading washing machine and a front loading washing machine depending on the position where the laundry is loaded into the washing machine.

Generally, the top loading washing machine includes a tub vertically stood to receive the laundry, a pulsator rotating in the tub to wash the laundry, and a lid provided on the top of the washing machine to open and close the tub. The top loading washing machine washes the laundry using friction between the laundry and a water stream generated by rotation of the pulsator. The top loading washing machine has advantages in view of short washing duration, large capacity, and low cost. However, the top loading washing machine provided with the pulsator has drawbacks in that tangling of the laundry occurs and damage of the laundry is relatively high.

The front loading washing machine generally includes a drum and a tub provided in parallel with each other to receive the laundry, a plurality of lifters provided in the drum to lift and drop the laundry when the drum is rotated, and a door provided on a front surface of the washing machine to open and close the drum. The front loading washing machine washes the laundry by rotating the drum at low speed after putting water, detergent, and the laundry into the drum. The front loading washing machine has advantages in that damage of the laundry is small and tangling of the laundry does not occur.

However, the above washing machines require a great volume of washing water to carry out washing processes along with a long time taken to sup-ply/drain the washing water to/from the washing machine.

### SUMMARY OF THE INVENTION

Accordingly, the present invention is directed to a washing machine and a washing method thereof, which substantially obviate one or more problems due to limitations and disadvantages of the related art.

An object of the present invention is to provide a washing machine and a washing method thereof, in which waste of washing water is reduced and washing efficiency is improved.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a washing method according to the present invention includes the steps of determining the volume of laundry in a tub, setting a first water level for a preliminary washing stroke and a second water level for a main washing stroke based on the determined volume of laundry, carrying out the preliminary washing stroke using washing water of the first water level and steam, and converting the preliminary washing stroke into the main washing stroke based on washing water of the second water level depending on an inner temperature of the tub. The second water level for the main washing stroke is higher than the first water level for the preliminary washing stroke.

The step of carrying out the preliminary washing stroke based on washing water of the first water level and the steam includes the steps of determining whether the washing water of the first water level decreases, and resupplying the washing water into the tub if the washing water of the first water level decreases.

The step of converting the preliminary washing stroke into the main washing stroke depending on the inner temperature of the tub includes the step of stopping a steam generator from steaming if the inner temperature of the tub is higher than a reference temperature. The reference temperature is set based on the volume of laundry.

In another aspect of the present invention, a washing machine includes a temperature sensor sensing an inner temperature of a tub, a steam generator supplying steam into the tub, and a controller setting a first water level for a preliminary washing stroke and a second water level for a main washing stroke based on the volume of laundry in the tub, and converting the preliminary washing stroke based on washing water of the first water level and the steam into the main washing stroke based on washing water of the second water level depending on the inner temperature of the tub.

In still another aspect of the present invention, a washing method includes the steps of determining the volume of laundry in a tub, setting a first water level for a preliminary washing stroke, a second water level for a main washing stroke, a preliminary washing duration, and a main washing duration based on the determined volume of laundry, carrying out the preliminary washing stroke using washing water of the first water level and steam during the preliminary washing duration, and converting the preliminary washing stroke into the main washing stroke based on washing water of the second water level during the main washing duration.

In further still another aspect of the present invention, a washing machine includes a water level sensor sensing a water level in a tub, a steam generator supplying steam into the tub, and a controller setting a first water level for a preliminary washing stroke, a second water level for a main washing stroke, a preliminary washing duration and a main washing duration based on the volume of laundry in the tub, and sequentially carrying out the preliminary washing stroke based on washing water of the first water level and the steam during the preliminary washing duration and the main washing stroke based on washing water of the second water level during the main washing duration.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating a washing machine according to the present invention;

FIG. 2 is a sectional view illustrating the washing machine shown in FIG. 1;

FIG. 3A is a cutaway perspective view illustrating a steam generator of the washing machine shown in FIG. 1;

FIG. 3B is a cutaway perspective view illustrating another steam generator of the washing machine shown in FIG. 1;

FIG. 4 illustrates a nozzle assembly connected with a water supply hose and a supply hose;

FIG. 5 is a block diagram illustrating elements required for a washing stroke according to the present invention;

FIG. 6 is a flow chart illustrating a washing method according to the first embodiment of the present invention; and

FIG. 7 is a flow chart illustrating a washing method according to the second embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

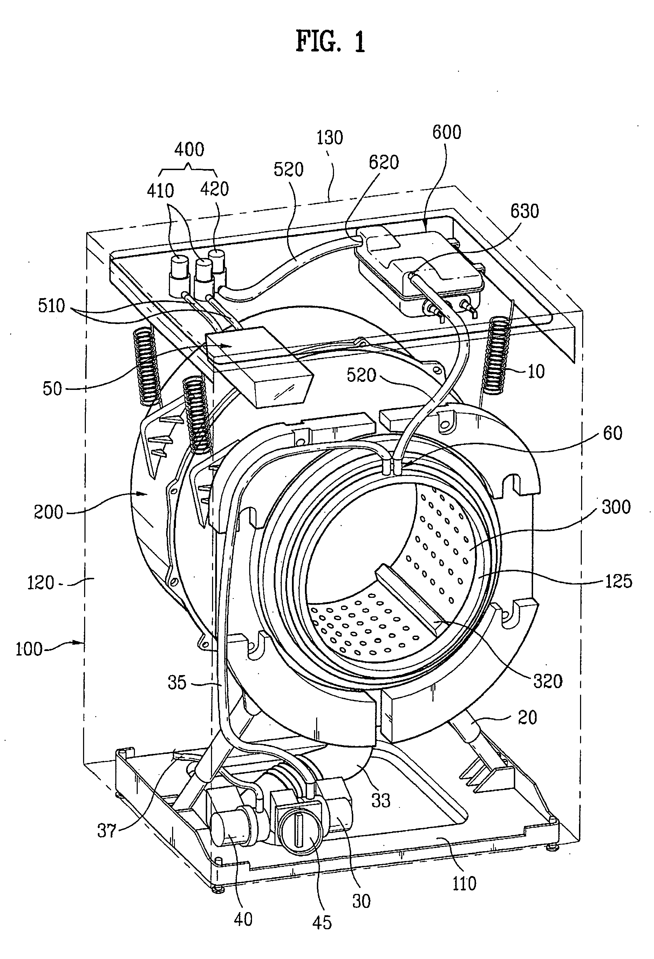

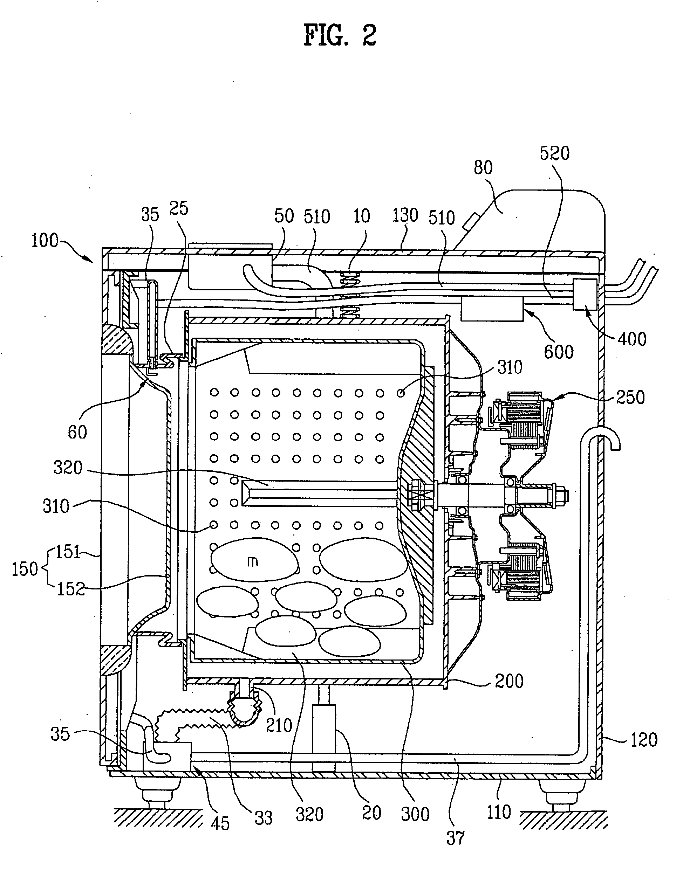

FIG. 1 is a perspective view illustrating a washing machine according to the present invention, and FIG. 2 is a sectional view illustrating the washing machine shown in FIG. 1. Referring to FIG. 1 and FIG. 2, a front loading drum washing machine is exemplarily shown. The front loading drum washing machine includes a tub 200 provided in a case 100 to receive washing water, and a drum 300 rotatably provided in the tub 200 to receive the laundry. The tub 200 and the drum 300 are provided in a horizontal direction. The present invention is not limited to the front loading drum washing machine shown in FIG. 1 and FIG. 2. The present invention may be applied to a top loading pulsator washing machine in which the tub and the drum are provided in a vertical direction.

Hereinafter, the washing machine according to the present invention will be described in more detail with reference to FIG. 1 and FIG. 2. Referring to FIG. 1 and FIG. 2, the case 100 of the washing machine includes a base 110, a wall 120, and a top plate 130. The base 110 constitute the bottom of the case 100. A damper 20 is provided on the base 110 to support the tub 200 that will be described later. The wall 120 is stood above the base 110 to form a space therein, where the tub 200 is to be provided. The wall 120 constitutes a front surface, a rear surface and both sides of the case 100. The top plate 130 is provided at an opened upper portion of the wall 120 to seal the inner space of the case 100 formed by the wall 120 and the base 110.

A control panel 80 is provided on a top of the front surface of the wall 120 or a top surface of the top plate 130 to allow a user to manipulate the washing machine. Springs 10 are connected with the wall 120 or an inner surface of the top plate 130 to allow the tub 200 to be hung thereon. A loading hole 125 is formed on any one of the wall, for example, the front surface of the wall 120 to take the laundry'm' in and out. The loading hole 125 is opened and closed by a door 150 hinged on the front surface of the wall 120. The door 150 includes a door frame 151 and a door glass 155. The door glass 155, as shown in FIG. 2, is provided in a hole formed at the center of the door frame 151. Therefore, the user can view the inner portion of the washing machine, more specifically, the inner portion of the drum 300, through the door glass 150. The drum 300 will be described later.

The tub 200 is provided in the inner space of the case 100. The tub 200 is supported by the springs 10 and the damper 20 in a state that it floats at the center of the inner space. The tub 200 is provided such that its opened front surface faces the loading hole 125 of the wall 120. The washing water is supplied into the tub 200 and stored therein.

The drum 300 is rotatably provided in the inner space of the tub 200. To this end, a motor 250 is provided in the case 100 to rotate the drum 300. An example of a shaft of the motor 250 directly fixed to the drum 300 is shown in FIG. 2. In this case, the shaft is fixed to the rear surface of the drum 300 by passing through the tub 200. Meanwhile, although not shown, the motor 250 may be provided to indirectly rotate the drum 300. In this case, the drum 300 and the motor 250 may be connected with each other by a power transmission member such as a belt.

A plurality of through holes 310 are formed along the circumference of the drum 300 as shown in FIG. 2. The washing water stored in the tub 200 can enter the inner space of the drum 300 through the through holes 310. As shown in FIG. 1 and FIG. 2, a plurality of lifters 320 are projected from the inner circumference of the drum 300. The lifters 320 lift and then drop the laundry 'm' when the drum 300 is rotated.

As shown in FIG. 2, a gasket 25 is provided between the tub 200 and the front surface of the wall 120. The gasket 25 prevents the washing water and the laundry 'm' in the tub 200 from leaking out of the tub 200 and entering the inner space of the case 100. Meanwhile, a nozzle assembly 60 is provided at an upper portion of the gasket 25 to pass through the gasket 25. The nozzle assembly 60 will be described later.

A water supply valve 400 is provided at one side of the case 100, for example, the rear surface of the wall 120, as shown in FIG. 1 and FIG. 2. The water supply valve 400 is connected with an outer water supply source, for example, a tap, and controls the washing water supplied from the water supply source. In the washing machine according to the present invention, the water supply valve 400 includes at least two valves, i.e., a first valve 410 and a second valve 420.

The first valve 410 is connected with the tub 200 through a first hose, for example, a water supply hose 510. The second valve 420 is connected with the tub 200 through a second hose, for example, a supply hose 520. As shown in FIG. 1, the second hose, i.e., the supply hose 520 communicates the water supply valve 400 with the tub 200 through a path different from that of the first hose, i.e., the water supply hose 510.

The water supply valve 400 supplies water into the tub 200 through two hoses having paths different from each other as above, i.e., the water supply hose 510 and the supply hose 520. The water supply valve 400 can simultaneously or separately control the first valve 410 and the second valve 420. Thus, the water supply to the tub 200 through the water supply hose 510 and the water supply to the tub 200 through the supply hose 520 can be carried out simultaneously or separately.

The water supply hose 510 that communicates the first valve 410 with the tub 200 passes through a detergent box 50 as shown in FIG. 1. The water supply hose 510 may be provided to directly pass through the detergent box 50. Alternatively, the water supply hose 510 may communicate with a part of the detergent box 50 so that it is supplied with the detergent from the detergent box 50. Therefore, the washing water flown to the water supply hose 510 through the first valve 410 is supplied into the tub 200 after always passing through the detergent box 50. The washing water supplied into the tub 200 through the water supply hose 510 flows down along the inner surface of the tub 200 and is collected in the bottom of the tub 200. Meanwhile, the first valve 410 and the water supply hose 510 communicating with the detergent box 50 may be provided in large numbers as shown in FIG. 1. In such case, the detergent for washing and the detergent for rinsing can respectively be supplied into the tub 200 at a timing interval.

The supply hose 520 that communicates the second valve 420 with the tub 200 detours the detergent box 50 as shown in FIG. 1. Instead, the supply hose 520 passes through a tank 610, for example. The tank 610 stores a predetermined volume of water or overflows the water stored therein to supply the water into the tub 200. Further, the tank 610 may supply the predetermined volume of water stored therein into the tub 200 at one time. The supply hose 520 passing through the tank 610, as shown in FIG. 2, is connected with the nozzle assembly 60 provided to pass through the gasket 25. Therefore, the washing water flown to the supply hose 520 through the second valve 420 is supplied into the tub 200 after always passing through the tank 610.

Meanwhile, it is possible to obtain higher washing effect when the laundry is washed using heated water than washing effect obtained when the laundry is washed using cold water. Therefore, in the washing machine according to the present invention, a steam generator 600 is provided as shown in FIG. 1 and FIG. 2 so that hot steam is supplied into the tub 200 to enhance the washing effect. To allow the steam generator 600 to supply the steam into the tub 200, a water tank storing water supplied from the water supply source, a heater heating the water stored in the water tank, and a path connecting the water supply source, the water tank and the tub 200 with one another are required.

The washing machine according to the present invention are provided with the second hose, i.e., the supply hose 520 connecting the water supply valve 400 with the tub 200 and the tank 610 provided at a middle portion of the supply hose 520 to store the water therein. Therefore, to efficiently use the inner space of the washing machine and reduce the number of parts, the tank 610 and the supply hose 520 are used as the parts of the steam generator 600.

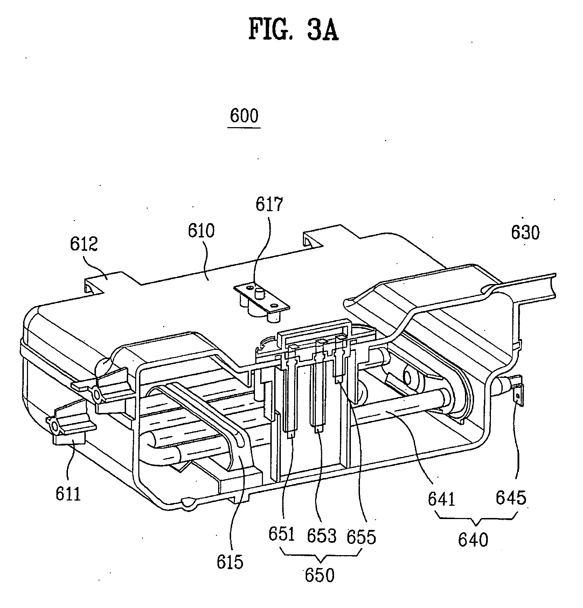

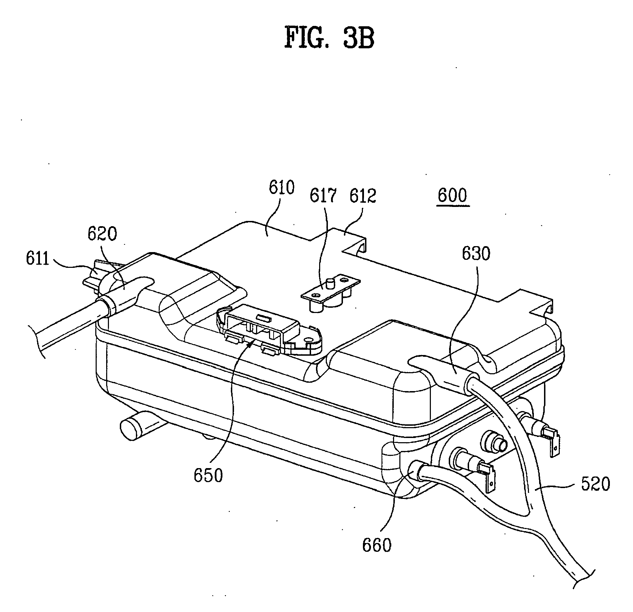

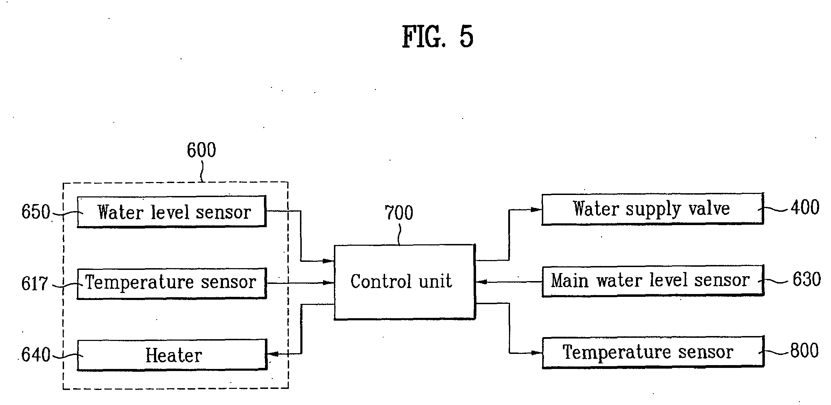

In the present invention, the steam generator 600 that uses the tank 610 and the supply hose 520 as its parts can supply the washing water supplied from the second valve 420 into the tub 200 through the nozzle assembly 60 in a liquid or steam state. FIG. 3A and FIG. 3B illustrate the steam generator 600 in detail, and FIG. 5 illustrates elements related to water supply. Hereinafter, the steam generator 600 will be described in more detail.

The steam generator 600, as shown in FIG. 3A, includes the tank 610 having an inlet 520 and an outlet 630, a heater 640 provided on the bottom inside the tank 610, a sensor assembly 650 sensing a water level in the tank 610, and at least one temperature sensor 617 sensing a temperature inside the tank 610.

The tank 610 has a space therein, which can receive a predetermined volume of water. A flange 611 and an extension 612 are formed on an outer surface of the tank 610 to fix the tank 610 to the inner surface of the case 100. The inlet 620 and the outlet 630 are formed at an upper portion of the tank 610. This is to prevent the water in the tank 610 from flowing backward toward the second valve 420 through the inlet 620 and effectively drain out the steam generated in the tank 610 through the outlet 630. Portions of the tank 610 where the inlet 620 and the outlet 630 are formed are locally projected as shown in FIG. 1 and FIG. 3A.

The inlet 620 communicates with the second valve 420 through the supply hose 520 while the outlet 630 communicates with the nozzle assembly 60 through supply hose 520. Meanwhile, the inlet 620 and the outlet 630 are not provided with a separate on/off valve. Therefore, the inlet 620 can counteract the outlet 630 and vice versa. For example, the inlet 620 may be used as the outlet while the outlet 630 may be used as the inlet. In such case, when the position of the tank 610 should be changed in the case 100, the inlet 620 and the outlet 630 are used to be compatible with each other. Thus, the tank 610 can be used for different models. However, the outlet 630 and the inlet 620 may respectively be provided with an on/off valve as occasion demands.

The heater 640 includes a radiator 641 and a terminal 645. The radiator 641 of the heater 640, as shown in FIG. 3A, is uniformly provided on the bottom inside the tank 610. The terminal 645 of the heater 640 is exposed to the outside after passing through the side of the tank 610. Meanwhile, one end of the radiator 641 is supported in a state that it is spaced apart from the bottom of the tank 610 at a predetermined distance by a clamp 615 provided on the bottom of the tank 610.

The sensor assembly 650 includes a plurality of electrodes that sense a minimum water level and a full water level in the tank 610. The minimum water level is to prevent the radiator 641 of the heater 640 from being overheated. The minimum water level is determined at the position a little higher than the top of the radiator 641 to prevent the radiator 641 from being exposed. The full water level is to prevent the water supplied into the tank 610 from being overflown through the outlet 630. The full water level is determined at the position a little lower than the outlet 630.

The sensor assembly 650 that senses the minimum water level and the full water level includes a common electrode 651, a first electrode 653, and a second electrode 655, as shown in FIG. 3A. The common electrode 651, the first electrode 653, and the second electrode 655 are vertically arranged in a state that they are spaced apart from one another at a predetermined distance. Top ends of the electrodes are provided to pass through the top surface of the tank 610. Terminals are respectively formed on the top ends of the electrodes exposed by passing through the tank 610.

The common electrode 651 and the first electrode 653, as shown in FIG. 3A, are long and their heights are substantially the same as each other. Therefore, the common electrode 651 and the first electrode 653 are simultaneously soaked in the water or exposed from the water. If the common electrode 651 and the first electrode 653 are simultaneously soaked in the water, the common electrode 651 and the first electrode 653 are electrically connected with each other. Thus, a controller 700 such as a microprocessor determines that the water level in the tank 610 is higher than the minimum water level.

By contrast, if the common electrode 651 and the first electrode 653 are simultaneously exposed from the water as the water level in the tank 610 decreases, the common electrode 651 and the first electrode 653 are electrically disconnected from each other. Thus, the controller 700 determines that the water level in the tank 610 is lower than the minimum water level. If the water level in the tank 610 is lower than the minimum water level, the controller 700 stops the operation of the heater 640 to prevent the heater 640 from being damaged by overheat.

The second electrode 655 is shorter than the common electrode 651 and the first electrode 653. Therefore, a lower end of the second electrode 655 is positioned to be higher than lower ends of the common electrode 651 and the first electrode 653. If the second electrode 655 is not soaked in the water as the water level in the tank 610 is low, the common electrode 651 and the second electrode 655 are electrically disconnected from each other. Thus, the controller 700 determines that the water level in the tank 610 does not reach the full water level.

By contrast, if the second electrode 655 is soaked in the water as the water level in the tank 610 increases, the common electrode 651 and the second electrode 655 are electrically connected with each other. Thus, the controller 700 determines that the water level in the tank 610 reaches the full water level. If the water level in the tank 610 reaches the full water level, the controller 700 closes the second valve 420 to stop the water from being supplied into the tank 610 when the steam generator 600 generates steam. However, the controller 700 does not close the second valve 420 even if the sensor assembly 650 senses the full water level when the water is supplied into the tub 200 through the steam generator 600. Thus, the water continues to be supplied into the tank 610. As a result, the water supplied into the tank 610 is overflown from the tank 610 so that the water can be supplied into the tub 200 through the outlet 630.

Hereinafter, the procedure of generating steam through the aforementioned steam generator 600 will be described in brief. First, the controller 700 measures the water level in the tank 610 using the sensor assembly 650. If the water level in the tank 610 is low, the controller 700 opens the second valve 420 to supply the washing water into the tank 610. However, if the sensor assembly 650 senses the full water level, the controller 700 closes the second valve 420 to stop the washing water from being supplied into the tank 610.

If the tank 610 is filled with the washing water, the heater 640 is operated to heat the washing water in the tank 610. If the washing water is heated, steam is generated. The generated steam is sprayed into the tub 200 through the outlet 630. The water level in the tank 610 is gradually lowered as the steam continues to be supplied into the tub 200. If the washing water in the tank 610 is evaporated to allow the water level in the tank 610 to reach the minimum water level, the controller 700 turns the heater 640 off. If necessary, the controller 700 turns again the heater 640 on to supply the steam into the tub 200 after supplying the washing water into the tank 610.

The case where the water in the tank 610 is supplied into the tub 200 through the outlet 630 as the water in the tank 610 overflows has been described as above. However, the present invention is not limited to such case. As another example, the water stored in the tank 610 may be supplied into the tub 200 at one time if the water in the tank 610 reaches the full water level. To this end, as shown in FIG. 3B, a second outlet 660 that can be turned on/off is provided at a lower portion of the tank 610. The second outlet 660 is connected with the supply hose 520 connected with the tub 200. The second outlet 660 constructed as above is usually closed. The second outlet 660 is selectively opened to supply the washing water stored in the tank 610 into the tub 200 at one time only when the user intends to supply the washing water into the tub 200 while measuring the volume of the washing water.

Meanwhile, as shown in FIG. 2, a drain 210 is formed at the lower portion of the tub 200. The drain 210 is connected with a bellows tube 33. The bellows tube 33 is connected with a pump unit that pumps the water supplied into the tub 200 through the drain 210 and the bellows tube 33 to drain the water out or circulates the water in the drum 300.

The pump unit, as shown in FIG. 1, includes a pump housing 45, a circulating pump 30, and a drain pump 40. The pump housing 45 is supplied with the water passing through the drain 210 and the bellows tube 33. The drain pump 40 is connected with a drain hose 37 that communicates with the outside. The drain pump 40 drains the washing water supplied into the pump housing 50 out through the drain hose 37 during a drain stroke of the washing machine.

The circulating pump 30 is connected with a circulating hose 35. The circulating hose 35 is connected with the nozzle assembly 60 of which one end is provided to pass through the gasket 25 as shown in FIG. 2. The circulating pump 30 pumps the washing water supplied into the pump housing 45 toward the circulating hose 35 during washing and rinsing strokes of the washing machine. The pumped washing water is sprayed into the tub 200 through the nozzle assembly 60.

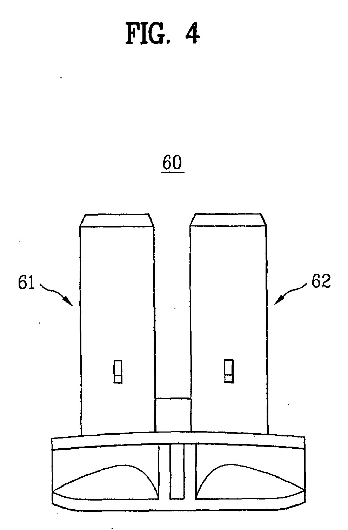

As described above, the nozzle assembly 60 provided to pass through the gasket 25 is connected with the circulating hose 35 and the supply hose 520, respectively. The nozzle assembly 60, as shown in FIG. 4, includes a first nozzle 61 connected with the circulating hose 35 to spray the washing water pumped by the circulating pump 30 into the tub 200, and a second nozzle 62 connected with the supply hose 520 to spray the steam generated by the steam generator 600 or the washing water passing through the steam generator 60 into the tub 200. The first nozzle 61 and the second nozzle 62, as shown in FIG. 4, are arranged in parallel with each other and formed in a single body to facilitate their manufacture and arrangement.

Meanwhile, in the present invention, the washing water is supplied into the tub 200 through the supply hose 520 that detours the detergent box 50 as well as the water supply hose 510 that passes through the detergent box 50. Therefore, a greater volume of the washing water can be supplied into the tub 200 within a shorter time in comparison with the related art washing machine that supplies the water only through the water supply hose 510.

Hereinafter, embodiments of a water supply method according to the present invention will be described in detail.

First Embodiment

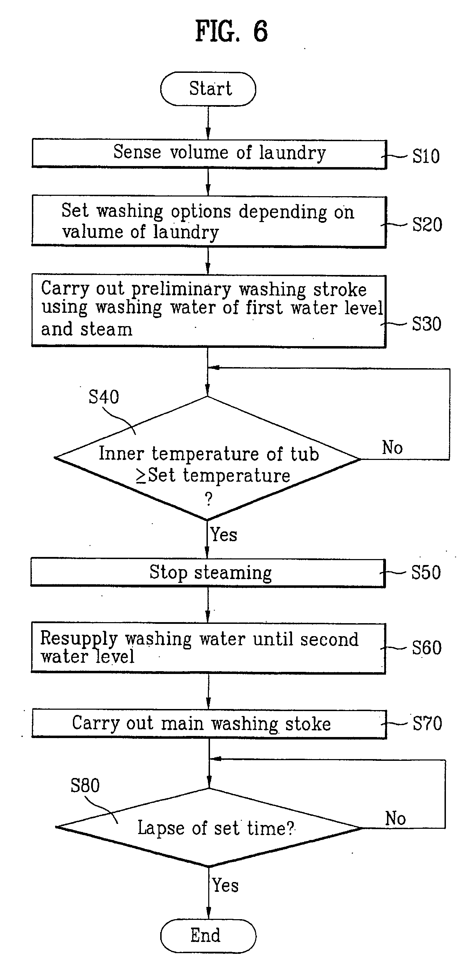

FIG. 6 is a flow chart illustrating a washing method according to the first embodiment of the present invention. Referring to FIG. 6, if a washing stroke starts, the controller 700 senses the volume of the laundry (S10). The controller 700 repeatedly rotates the drum 300 in forward and reverse directions to sense the volume of the laundry. The controller 700 determines the volume of the laundry based on load and rotational speed of the drum 300 detected when the drum 300 is rotated. Another methods of determining the volume of the laundry may be applied to the present invention.

If the volume of the laundry is determined, the controller 700 selects various washing options depending on the volume of the laundry (S20). For example, the controller 700 can determine the volume of the washing water (first water level) to be used for a preliminary washing stroke, the volume of the washing water (second water level) to be used for a main washing stroke, duration of the washing stroke, a number of times/duration of a rinsing stroke, a number of times/duration of a dehydrating stroke, and so on based on the volume of the laundry. The preliminary washing stroke is to sufficiently soak the laundry using a small volume of washing water and increase an inner temperature of the tub 200 and a temperature of the washing water using steam. The main washing stroke is to normally wash the laundry. Since the first water level is lower than the second water level, the washing water in the main washing stroke should be resupplied into the tub 200. The controller 700 can determine the volume (second water level minus first water level) of the washing water to be resupplied in the main washing stroke. Optionally, the controller 700 can set a reference temperature T used for the preliminary washing stroke, duration of the preliminary washing stroke, duration of the main washing stroke, the volume of the washing water supplied to the steam generator 600, driving duration of the heater 640, and so on depending on the volume of the laundry.

If various options are selected, the washing water is supplied into the tub 200 by the first water level. To this end, the controller 700 opens the first valve 410 to supply the washing water of the water supply source into the tub 200 through the water supply hose 510. The water supply hose 510 passes through the detergent box 50 as mentioned above. Therefore, if there is the detergent in the detergent box 50, the detergent is supplied into the tub 200 along with the washing water flown into the water supply hose 510. The washing water supplied into the tub 200 through the water supply hose 510 flows down along the inner surface of the tub 200 and is collected in the bottom of the tub 200. With the lapse of time, the water level in the tub 200 gradually increases. At the same time, the controller 700 opens the second valve 420 to supply the washing water to the steam generator 600. The washing water flown into the supply hose 520 is supplied into the tank 610 of the steam generator 600. With the lapse of time, the tank 610 is filled with the washing water.

While the washing water is supplied into the tank 610, the sensor assembly 650 of the steam generator 600 senses the water level in the tank 610. If the water level in the tank 610 reaches the full water level, the controller 700 closes the second valve 420. The controller 700 turns the heater 600 on for a set time, for example, several seconds or several tens of seconds to heat the washing water in the tank 610. If the washing water in the tank 610 starts to boil, the steam is generated and the pressure in the tank 610 increases. The controller 700 turns the heater 640 off after the lapse of the set time.

While the washing water is supplied into the tub 200, a main water level sensor 330 repeatedly senses the water level of the washing water flowing into the tub 200. The main water level sensor 330 converts the weight or pressure of the washing water in the tub 200 into a frequency signal and transmits the frequency signal to the controller 700. The controller 700 determines the water level of the washing water based on the frequency signal transmitted from the main water level sensor 330. The controller 700 closes the first valve 410 if the sensed water level reaches the first water level. For example, supposing that the water level frequency corresponding to the first water level is in the range of 1000kHz to 1200kHz, the controller 700 closes the first valve 410 when the frequency signal transmitted from the main water level sensor 330 reaches 1000kHz to 1200kHz.

If the washing water in the tank 610 is boiled and the water level in the tub 200 reaches the first water level, the controller 700 supplies the steam into the tub 200 and at the same time rotates the drum 300. In other words, the controller 700 carries out the preliminary washing stroke using the steam and the washing water of the first water level (S30).

In addition, since the laundry absorbs the water during the preliminary washing stroke, the water level in the tub 200 may be lowered. If the water level in the tub 200 becomes lower than the first water level, the controller 700 resupplies the washing water into the tub 200. For example, if the frequency signal transmitted from the main water level sensor 330 is lower than 1000kHz, the controller 700 resupplies the washing water into the tub 200 at a certain volume.

While the preliminary washing stroke is carried out, a temperature sensor 800 provided in the tub 200 repeatedly senses the inner temperature of the tub 200. Then, the controller 700 compares the sensed inner temperature 't' with a previously set temperature 'T' (S40). If the inner temperature 't' sensed by the temperature sensor 800 is lower than the previously set temperature 'T,' the controller 700 continues to drive the heater 640 and maintains the preliminary washing stroke. In other words, the preliminary washing stroke using the steam is maintained until the sensed inner temperature 't' reaches the previously set temperature 'T.' The heater 640 is set to be driven for a previously set time. However, the heater 640 is driven again if the sensed inner temperature 't' is lower than the previously set temperature 'T.'

Afterwards, if the sensed inner temperature 't' reaches the previously set temperature 'T,' the controller 700 stops driving of the steam generator 600 to prevent the steam from being supplied into the tub 200 (S50). The controller 700 converts the preliminary washing stroke into the main washing stroke. To carry out the main washing stroke, the controller 700 simultaneously opens the first valve 410 and the second valve 420 and supplies the washing water into the tub 200 through the water supply hoses 510 and 520 until the water level in the tub 200 reaches the second water level (S60).

If the water level in the tub 200 reaches the second water level, the controller 700 carries out the main washing stroke for a set duration of the main washing stroke (S70~S80).

Second Embodiment

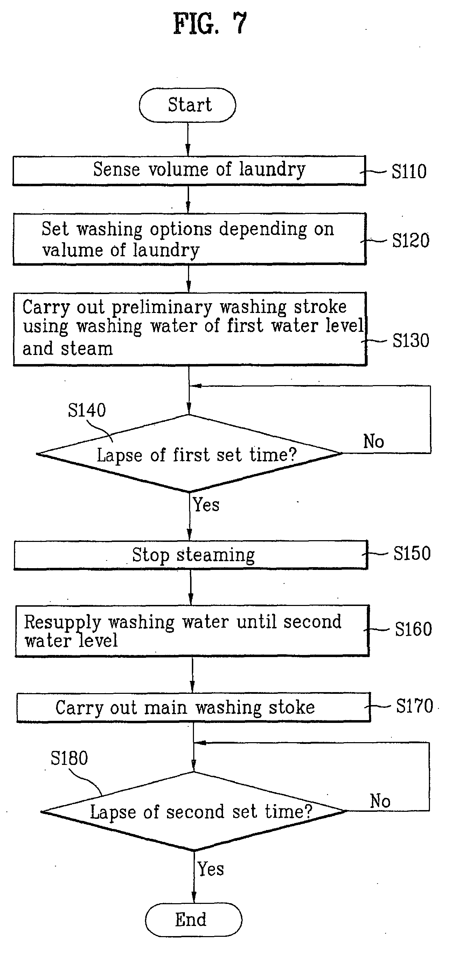

FIG. 7 is a flow chart illustrating a washing method according to the second embodiment of the present invention. Referring to FIG. 7, if a washing stroke starts, the controller 700 determines the volume of the laundry (S110) and selects various washing options depending on the volume of the laundry (S120). For example, the controller 700 can set the volume of the washing water (first water level) to be used for the preliminary washing stroke, the volume of the washing water (second water level) to be used for the main washing stroke, number of times/duration of the rinsing stroke, number of times/duration of the dehydrating stroke, duration of the preliminary washing stroke (first set time), duration of the main washing stroke (second set time), and so on depending on the volume of the laundry.

Then, the controller 700 carries out the preliminary washing stroke using the steam and the washing water of the first water level during the preliminary washing stroke duration (first set time) (S130~S140). If the preliminary washing stroke duration passes, the controller 700 converts the preliminary washing stroke into the main washing stroke.

To convert the preliminary washing stroke into the main washing stroke, the controller 700 stops the steam from being supplied into the tub 200 (S150) and supplies the washing water into the tub 200 through the water supply hoses 510 and 520 until the water level in the tub 200 reaches the second water level (S160).

If the water level in the tub 200 reaches the second water level, the controller 700 carries out the washing stroke during the set duration of the main washing stroke (second set time) (S170~S180).

In the present invention, the washing stroke has been described. The present invention may be applied to a soaking stroke and a rinsing stroke. For example, the rinsing stroke of the present invention may include a preliminary rinsing stroke based on a small volume of washing water and steam and a main rinsing stroke based on a large volume of washing water.

As described above, since the small volume of the washing water is used for the preliminary washing stroke, the concentration of the detergent contained in the washing water is high. Since the temperature in the tub and the temperature of the washing water are increased using the steam, washing efficiency is improved. Moreover, since the large volume of the washing water is used for the main washing stroke, it is possible to easily separate the laundry from contaminants.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A washing method comprising the steps of:
determining the volume of laundry in a tub;
setting a first water level for a preliminary washing stroke and a second water level for a main washing stroke based on the determined volume of laundry;
carrying out the preliminary washing stroke using washing water of the first water level and steam; and
converting the preliminary washing stroke into the main washing stroke based on washing water of the second water level depending on an inner temperature of the tub.

2. The washing method as claimed in claim 1, wherein the second water level for the main washing stroke is higher than the first water level for the preliminary washing stroke.

3. The washing method as claimed in claim 1, further comprising the step of setting a driving duration of a steam generator that generates steam and the volume of washing water supplied to the steam generator.

4. The washing method as claimed in claim 1, wherein the step of carrying out the preliminary washing stroke using washing water of the first water level and steam includes the steps of:
determining whether the washing water of the first water level decreases; and
resupplying the washing water into the tub if the washing water of the first water level decreases.

5. The washing method as claimed in claim 1, wherein the step of converting the preliminary washing stroke into the main washing stroke depending on the inner temperature of the tub includes the step of stopping the steam generator from steaming if the inner temperature of the tub is higher than a reference temperature.

6. The washing method as claimed in claim 5, wherein the reference temperature is set based on the volume of laundry.

7. A washing machine comprising:
a temperature sensor sensing an inner temperature of a tub;
a steam generator supplying steam into the tub; and
a controller setting a first water level for a preliminary washing stroke and a second water level for a main washing stroke based on the volume of laundry in the tub, and converting the preliminary washing stroke based on washing water of the first water level and the steam into the main washing stroke based on washing water of the second water level depending on the inner temperature of the tub.

8. The washing machine as claimed in claim 7, wherein the controller sets the second water level to be higher than the first water level.

9. The washing machine as claimed in claim 7, wherein the controller further sets a driving duration of the steam generator and the volume of washing water supplied to the steam generator based on the volume of laundry.

10. The washing machine as claimed in claim 7, wherein the controller determines whether the washing water of the first water level decreases during the preliminary washing stroke and resupplies the washing water into the tub if the washing water of the first water level decreases.

11. The washing machine as claimed in claim 7, wherein the controller stops the steam generator from steaming if the inner temperature of the tub is higher than a reference temperature and converts the preliminary washing stroke into the main washing stroke.

12. The washing machine as claimed in claim 11, wherein the controller sets the reference temperature based on the volume of laundry.

13. A washing method comprising the steps of:
determining the volume of laundry in a tub;
setting a first water level for a preliminary washing stroke, a second water level for a main washing stroke, a preliminary washing duration, and a main washing duration based on the determined volume of laundry;
carrying out the preliminary washing stroke using washing water of the first water level and steam during the preliminary washing duration; and
converting the preliminary washing stroke into the main washing stroke based on washing water of the second water level during the main washing duration.

14. The washing method as claimed in claim 13, wherein the second water level for the main washing stroke is higher than the first water level for the preliminary washing stroke.

15. The washing method as claimed in claim 13, further comprising the step of setting a driving duration of a steam generator that generates steam and the volume of washing water supplied to the steam generator.

16. The washing method as claimed in claim 13, wherein the step of carrying out the preliminary washing stroke using washing water of the first water level and steam during the preliminary washing duration includes the steps of:
repeatedly determining whether the washing water of the first water level decreases; and
resupplying the washing water into the tub if the washing water of the first water level decreases.

17. A washing machine comprising:
a water level sensor sensing a water level in a tub;
a steam generator supplying steam into the tub; and
a controller setting a first water level for a preliminary washing stroke, a second water level for a main washing stroke, a preliminary washing duration and
a main washing duration based on the volume of laundry in the tub, and sequentially carrying out the preliminary washing stroke based on washing water of the first water level and the steam during the preliminary washing duration and the main washing stroke based on washing water of the second water level during the main washing duration.

18. The washing machine as claimed in claim 17, wherein the controller sets the second water level to be higher than the first water level.

19. The washing machine as claimed in claim 17, wherein the controller further sets a driving duration of the steam generator and the volume of washing water supplied to the steam generator based on the volume of laundry.

20. The washing machine as claimed in claim 17, wherein the controller determines whether the washing water of the first water level decreases during the preliminary washing stroke and resupplies the washing water into the tub if the washing water of the first water level decreases.
